# EUROPEAN PATENT SPECIFICATION

(11) **EP 1 140 561 B1**
(45) Date of publication and mention of the grant of the patent: **11.06.2003**
(21) Application number: 99964899.1
(22) Date of filing: 17.12.1999
(51) Int. Cl.: B60R 5/04, B60R 7/02

(54) **LOADING COMPARTMENT**
LADERAUM
COMPARTIMENT DE CHARGEMENT

(30) Priority: 17.12.1998 SE 9804389
(43) Date of publication of application: 10.10.2001
(73) Proprietor: Volvo Car Corporation, 405 31 Göteborg (SE)
(72) Inventor: CARLSSON, Anders, S-422 50 Hisings Backa (SE); WIBERG, Tomas, S-423 34 Torslanda (SE); HERAS PALEO, Ricardo, S-414 58 Gothenburg (SE)
(74) Representative: Winblad, Hans Peter
(86) International application number: PCT/SE99/02403
(87) International publication number: WO 00/035713

(56) References cited:
- WO-A1-95/01891
- CA-C- 2 137 634
- DE-A1- 3 332 695
- DE-A1- 4 340 675
- DE-A1- 19 802 077
- US-A- 5 636 890

## Description

The present invention relates to a loading compartment in a vehicle, comprising a recess in the floor of the vehicle and a cover which in a closed position essentially covers the recess and in an open position allows access to a storage space defined by the recess, which cover is articulately mounted in the floor.

In the transportation of goods such as food bags and cardboard boxes, a vehicle is often used. The goods are then placed preferably in the boot of the vehicle. The boot can be separate from the passenger compartment of the vehicle, such as in vehicles of the saloon car type, or can constitute a part of the passenger compartment, such as in station wagon or estate car models.

In existing vehicles, the floor of the boot is provided with a recess which defines a storage space in which a spare wheel and/or a battery can be stored. The recess is covered with a cover, which is articulately mounted in the floor. In the closed position of the cover, the cover constitutes a part of the floor of the vehicle on which goods can be placed.

The goods placed on the floor of the boot have proved however to have a tendency to tip over and/or move while the vehicle is moving, which means that the goods may be damaged or the goods may damage the furnishings of the vehicle.

An example of loading compartment can be seen in document DE 198 02 077 A1, according to which the preamble of claim 1 is established.

An object of the present invention is therefore to produce a loading compartment in a vehicle which fixes and lends support to the goods in the vehicle and hence prevents the goods from tipping over and/or moving in the vehicle.

This is achieved by virtue of a loading compartment of the kind stated in the introduction in which at least one supporting member is disposed on the cover so as to fix and lend support to goods placed in the storage space.

This is also achieved by virtue of a loading compartment of the kind stated in the introduction in which a load-receiving element matched to the shape of the recess is detachably disposed in the recess, which load-receiving element is provided with load-receiving surfaces for fixing and lending support to goods placed on the load-receiving element.

The load-receiving surfaces of the load-receiving element and the supporting member disposed on the cover fix and lend support to the goods, so that the goods are prevented from tipping over and/or moving.

The invention will be described in greater detail below with reference to an embodiment shown in the appended drawings, in which:
- Fig. 1: shows a loading compartment in a vehicle in a view seen from the rear of the vehicle, and
- Fig. 2: shows a perspective view of the loading compartment according to Fig. 1.

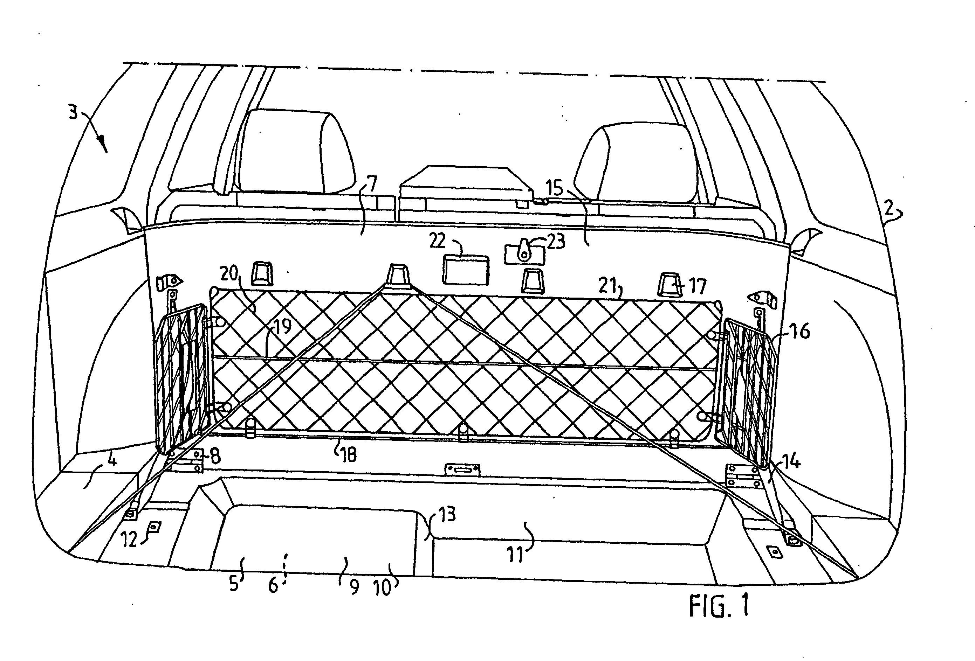

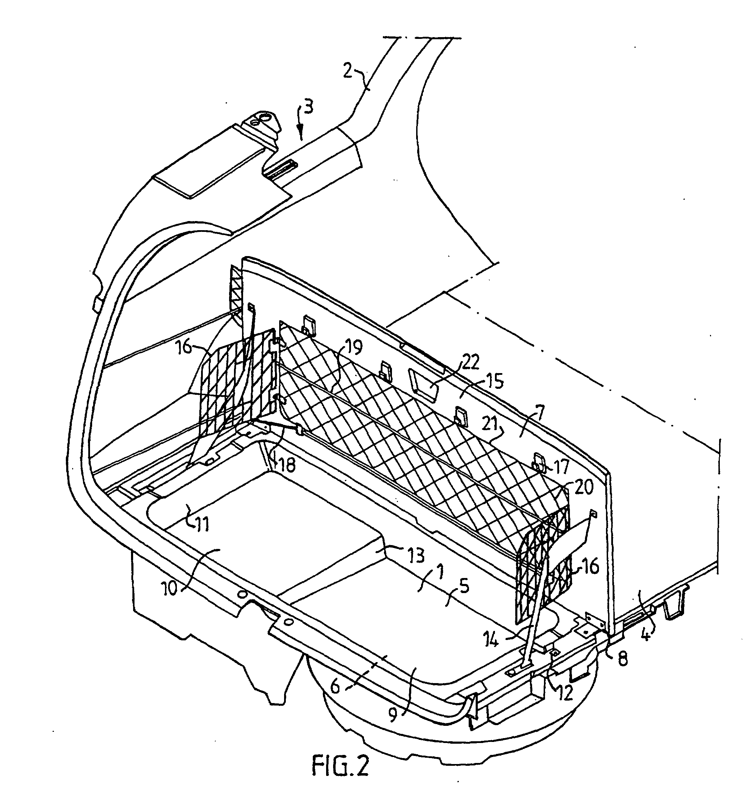

In Fig. 1, a loading compartment 1 is shown in a vehicle 2 in a view seen from the rear of the vehicle 2. According to the illustrative embodiment shown, the vehicle 2 is of the station wagon type, in which the rear hatch or the rear door to the boot 3 of the vehicle 2 is open. In Fig. 2, the loading compartment 1 according to Fig. 1 is shown in perspective. The floor 4 of the boot 3 is provided with a recess 5, which defines a storage space 6 for a spare wheel and battery (not shown).

A cover 7 is articulately mounted in the floor 4 by means of hinges 8. In Fig. 1, the cover 7 is raised into an open position, which allows access to the storage space 6. In a closed position, the cover 7 essentially covers the recess 5, so that the cover 7 coincides with the plane of the floor 4.

In the recess 5 there is disposed a load-receiving element 9. The load-receiving element 9 is removable to allow access to the storage space 6. Preferably, the load-receiving element 9 is shaped as a casing and provided with load-receiving surfaces in the form of a bottom surface 10 and side surfaces 11, which fix and lend support to goods (not shown) which are placed on the load-receiving element 9. The load-receiving element 9 is preferably made of injection-moulded plastic, but other materials are also conceivable. The bottom surface 10 is patterned to further lend support to goods placed on the surface 10, so that the said goods are prevented from sliding and moving in the loading compartment 1. The load-receiving element 9 is preferably detachably connected to the floor 4 by means of fastening devices 12, such as clips or screws. In Fig. 1, the bottom surface 10 is provided with a step 13, so that two levels of the bottom surface 10 are formed. This allows adaptation to goods of different sizes. It is nevertheless conceivable for the bottom surface 10 just to have one level. The shape of the load-receiving element 9 is preferably matched to the recess.

The cover 7 is articulately fitted to a front edge of the recess 5 in relation to the vehicle 2 and a load-receiving belt 14 is disposed between the cover 7 and the floor 4 on each side of the cover 7, which belt 14, together with the cover 7, prevents goods from being thrown forward in the vehicle 2. On the underside 15 of the cover 7, that is to say that side of the cover 7 which, in the closed position of the cover 7, is facing the recess 5, there are disposed first and second supporting members 16,17. The first supporting members comprise supporting flaps 16 articulately mounted on the cover 7, which supporting flaps, with the aid of the load-receiving belts 14, are automatically folded out from the cover 7 when the cover 7 is raised from the closed into the open position. The supporting flaps 16 are spring-tensioned, so that, in the closed position of the cover 7, they are folded in and bear against the cover 7 and, in the open position of the cover 7, they are folded out and extend essentially at right-angles to the cover 7. The second supporting members comprise fastening members 17, disposed on the cover 7, for suspension of goods. According to the illustrative embodiment, the fastening members 17 are constituted by a plurality of hooks which are disposed on the underside 15 of the cover 7. An elastic cord 18 is disposed in the loading compartment 1, which cord can be fastened to the fastening members 17 so as to fix and lend support to the goods placed on the load-receiving element 9. An elastic strap 19 is clamped to the underside 15 of the cover 7, which strap 19 can be placed around the goods. On the underside 15 of the cover 7 there is also disposed a net 20, in which the goods can be placed. The net 20 forms a pocket, which is spring-loaded with the aid of an elastic band 21.

The cover 7 is provided with a handle 22, which can be gripped in order to raise and lower the cover 7. A locking device 23 ensures that the cover 7 is locked when in the lowered, closed position. In order to fix the cover 7 in the raised, open position, one or more leaf springs (not shown) are arranged in the region of the hinges 8. The leaf springs are configured such that the cover 7 snaps into a bent section of the leaf spring, which means that the cover 7 assumes a fixed position. When in this raised position, the cover 7 slopes preferably rearward in relation to the vehicle 2 at an angle of around 85 degrees between the floor 4 and the underside 15 of the cover 7. This angle of the cover 7 prevents goods from being thrown upward and forward in case of violent motions of the vehicle 2.

It is conceivable for goods to be placed in the loading compartment 1 with the load-receiving element 9 removed. The goods are thus placed directly in the storage space 6 formed by the recess 5. The supporting members 16, 17 fix and lend support to the goods which are placed in the storage space 6.

It is also conceivable to provide the loading compartment 1 just with the load-receiving element 9, the support surfaces 10, 11 of which fix and lend support to the goods which are placed on the load-receiving element 9.

## Claims

1. Loading compartment in a vehicle (2), comprising a recess (5) in the floor (4) of the vehicle (2) and a cover (7) which in a closed position essentially covers the recess (5) and in an open position allows access to a storage space (6) defined by the recess (5), which cover (7) is articulately mounted in the floor (4), **characterized in that** at least one supporting member (16, 17) is disposed on an underside of the cover (7) so as to fix and lend support to goods placed in the storage space (6), said first supporting member (16) comprises supporting flaps (16) articulately mounted on the cover (7), said supporting flaps (16) are-spring-tensioned, so that, in the closed position of the cover (7), they are folded in and bear against the cover (7) and, in the open position of the cover (7), they are folded out and extend essentially at right-angles to the cover (7).

2. Loading compartment according to Claim 1, **characterized in that** the cover (7) is articulately fitted to a front edge of the recess (5) in relation to the vehicle (2) and **in that** at least one load-receiving belt (14) is disposed between the cover (7) and the floor (4), which belt (14), together with the cover (7), prevents goods from being thrown forward in the vehicle (2).

3. Loading compartment according to any one of Claims 1 - 2, **characterized in that** a second supporting member (17) comprises fastening members (17), disposed on the cover (7), for suspension of goods.

4. Loading compartment according to Claim 3, **characterized in that** an elastic cord (18) is disposed in the loading compartment (1), which cord can be fastened to the fastening members (17) so as to fix and lend support to the goods placed in the recess (5).

5. Loading compartment according to any one of Claims 1 - 4, **characterized in that** a load-receiving element (9) having load-receiving surfaces (10, 11) is detachably disposed in the recess, which element (9) is removable to allow access to the storage space (6).

6. Loading compartment according to Claim 5, **characterized in that** the load-receiving element (9) is shaped as a casing, in which the load-receiving surfaces (10, 11) are constituted by a bottom surface (10) and side surfaces (11).

## Patentansprüche

1. Ladeabteil in einem Fahrzeug (2), umfassend eine Vertiefung (5) in dem Boden (4) des Fahrzeugs (2) und eine Abdeckung (7), die in einer geschlossenen Position im wesentlichen die Vertiefung (5) abdeckt und in einer offenen Position Zugang zu einem Lagerraum (6), der durch die Vertiefung (5) definiert ist, ermöglicht, welche Abdeckung (7) gelenkig in dem Boden (4) montiert ist, **dadurch gekennzeichnet, dass** mindestens ein Lagerelement (16, 17) an einer Unterseite der Abdeckung (7) derart angeordnet ist, um Güter, die in dem Lagerraum (6) platziert sind, zu befestigen und diesen Lagerung zu verleihen, wobei das erste Lagerelement (16) Lagerklappen (16) aufweist, die gelenkig an der Abdeckung (7) montiert sind, wobei die Lagerklappen (16) federvorgespannt sind, so dass sie in der geschlossenen Position der Abdeckung (7) eingefaltet sind und an der Abdeckung (7) anliegen, und in der offenen Position der Abdeckung (7) ausgefaltet sind und sich im wesentlichen unter rechten Winkeln zu der Abdeckung (7) erstrecken.

2. Ladeabteil nach Anspruch 1, **dadurch gekennzeichnet, dass** die Abdeckung (7) gelenkig an einer vorderen Kante der Vertiefung (5) in Bezug auf das Fahrzeug eingepasst ist, und dass mindestens ein lastaufnehmender Riemen (14) zwischen der Abdeckung (7) und dem Boden (4) angeordnet ist, welcher Riemen (14) zusammen mit der Abdeckung (7) verhindert, dass Güter nach vorne in das Fahrzeug (2) geworfen werden.

3. Ladeabteil nach einem der Ansprüche 1 - 2, **dadurch gekennzeichnet, dass** ein zweites Lagerelement (17) Befestigungselemente (17) aufweist, die auf der Abdeckung (7) zum Hängen von Gütern angeordnet sind.

4. Ladeabteil nach Anspruch 3, **dadurch gekennzeichnet, dass** ein elastisches Band (18) in dem Ladeabteil (1) angeordnet ist, welches Band an den Befestigungselementen (17) derart befestigt werden kann, um die in der Vertiefung (5) platzierten Güter zu befestigen und ihnen Lagerung zu verleihen.

5. Ladeabteil nach einem der Ansprüche 1 - 4, **dadurch gekennzeichnet, dass** ein lastaufnehmendes Element (9), das lastaufnehmende Flächen (10, 11) besitzt, lösbar in der Vertiefung angeordnet ist, welches Element (9) entfernbar ist, um Zugang zu dem Lagerraum (6) zu ermöglichen.

6. Ladeabteil nach Anspruch 5, **dadurch gekennzeichnet, dass** das lastaufnehmende Element (9) als Gehäuse geformt ist, in welchem die lastaufnehmenden Flächen (10, 11) durch eine Bodenfläche (10) und Seitenflächen (11) gebildet sind.

## Revendications

1. Compartiment de chargement dans un véhicule (2), comportant un évidement dans le plancher (4) du véhicule (2) et un couvercle (7), qui dans une position de fermeture recouvre sensiblement l'évidement (5) et dans une position ouverte permet l'accès à un espace de rangement (6) défini par l'évidement (5), dans lequel ce couvercle (7) est monté articulé sur le plancher (4), **caractérisé en ce qu'**au moins un organe de support (16,17) est disposé sur le dessous du couvercle (7) de façon à fixer et à prêter support à des marchandises placées dans l'espace de rangement (6), **en ce que** ledit organe de support (16) comprend des volets de support (16) montés articulés sur le couvercle (7), lesdits volets de support (16) étant tendus élastiquement de façon que, dans la position fermée du couvercle (7), ils soient repliés et portent contre le couvercle (7) et que, dans la position ouverte du couvercle (7) ils soient dépliés et s'étendent sensiblement à angles droits avec le couvercle (7).

2. Compartiment de chargement selon la revendication 1 **caractérisé en ce que** le couvercle (7) est ajusté de manière articulée sur un bord avant de l'évidement (5) par rapport au véhicule et **en ce qu'**au moins une ceinture (14) de réception de charge est disposée entre le couvercle (7) et le plancher (4), laquelle ceinture (14) avec le couvercle (7), empêche les marchandises d'être projetées en avant dans le véhicule (2).

3. Compartiment de chargement selon l'une quelconque des revendications 1 et 2 **caractérisé en ce qu'**un second organe de support (17) comporte des organes de fixation (17) disposés sur le couvercle (7) pour la suspension de marchandises.

4. Compartiment de chargement selon la revendication 3 **caractérisé en ce qu'**une corde élastique (18) est disposée dans le compartiment de chargement (1), et cette corde peut être fixée aux organes de fixation (17) de façon à fixer et à prêter support aux marchandises placées dans l'évidement (5).

5. Compartiment de chargement selon l'une quelconque des revendications 1 à 4 **caractérisé en ce qu'**un élément de réception de chargement (9) comportant des surfaces (10,11) de réception de chargement est disposé de manière amovible dans l'évidemment, et cet élément (9) peut être enlevé pour permettre un accès à l'espace de rangement (6).

6. Compartiment de chargement selon la revendication 5 **caractérisé en ce que** l'élément (9) de réception de charge est profilé sous forme de boîtier, dans lequel les surfaces (10,11) de réception de charge sont constituées par une surface de fond (10) et par des surfaces latérales (11).
